# EUROPEAN PATENT APPLICATION

(11) **EP 3 211 492 A1**
(43) Date of publication of application: **30.08.2017**
(21) Application number: 17154540.3
(22) Date of filing: 03.02.2017
(51) Int. Cl.: G05B 15/02, H04W 4/02, B60H 1/00, F24F 11/02

(54) **METHOD FOR ADDRESSING, LOCATING AND IDENTIFYING OF A SUB-UNIT AT A FACILITY FOR HANDLING OF VENTILATION AIR AND/OR FLUE GAS**

(30) Priority: 23.02.2016 SE 1650228
(71) Applicant: Fläkt Woods AB, 55184 Jönköping (SE)
(72) Inventor: SAM, Fröjd, S-564 91 Bankeryd (SE); WIBRAND, John, S-554 46 Jönköping (SE)
(74) Representative: Curo AS

(57) **Abstract**

Method for addressing, locating and identifying sub-units (1) at a ventilation system, which comprises a control system with at least one master unit (2). The sub-units (1) communicate with the master unit (2) via a network (3) and the sub-units (1) are subordinate to said master unit (2). By that a subset of unidentified sub-units (1) is set to signal, successively non-relevant sub-units (1) can be excluded, by interaction between an operator (4) and the control system, until only one sub-unit (1) remains, which by that is located and can be assigned an identity. The method can be repeated until all sub-units (1) are located and identified.

## Description

### Technical field

Present invention relates to a method for addressing, locating and identifying of one or more sub-units which are subordinate to at least one master unit, at a facility for handling of ventilation air and/or flue gas. The master units and the sub-units are communicating via a so called "backbone system", which can be either a wired or a wireless system.

### Background of the invention

In the ventilation sector and in the smoke evacuation sector it has long been known to use master units and sub-units, sometimes called master/slave, in connection to control, communication and management of an air handling system and/or a smoke evacuation system. Further, it is well known to in different ways connect the units to a so called backbone system for communication between master unit and sub-units, but also for communication between the sub-units and also for communication between multiple master units. A backbone system is a relatively broad term and can be either wired or wireless, and is briefly described a designation of an infrastructure, which exchanges information between sub-units and master unit/master units, and also between different backbone systems and/or networks. Wired backbone systems can be linked according to different topologies, for example, such as ring systems, star formation, "daisy-chain" etc., and wireless systems such as "wireless mesh network", "point to point", "star network", "clustered tree network "etc., to describe terminology in the art.

At such a system is the master unit of the backbone system usually placed clearly visible, for example in the entrance area of a building, if the system is a system for control and monitoring of for example a fire protection system, or in a air handling unit room if the system is a control system for operating and monitoring a complete or a part of the air handling system. Unlike the master unit are the sub-units in a ventilation system and in a smoke evacuation system often hidden above the false ceiling, and are therefore often hard to locate and access because of their hidden locations. The sub-units can for example be different kinds of connection boxes which for example controls one ore multiple dampers or other equipment handling different functions in the system, such as flue gas ventilation, ordinary damper functions or other parts of the control and monitoring system. At connection, firstly all units are connected to power supply and to the backbone system by an electrician, according to drawings of the system, while the system then typically is put into operation by an operator such as a ventilation technician/control technician. For different reasons it is not unusual that ventilation equipment and flue gas devices, such as dampers and the like which shall be controlled and monitored, are not positioned exactly where they were positioned on the drawing. The reasons for this are usually of a practical nature while collisions with other equipment forces a relocation of the units. It is also common that the drawings are of "schematic" character why the exact position of for example a fire damper and/or its connection box (sub-unit) not is exact, but more in principal shows that a certain sub-unit shall control for example a certain damper to a certain premises. At commissioning of the above described system according to prior art, the ventilation technician must, when addressing a sub-unit, which normally is positioned high up and often above the false ceiling, climb a ladder to each and every sub-unit, and give the respective unit an address, for example a so-called Modbus-address, which is then brought into the drawing or in a list or the like, where also the current position, i.e. the physical location is indicated, for example, floor 1, office 4, etc. When all sub-units are connected to an address and given an identity, maybe in the form of a name of a premises or the like, the master unit can be switched on and commissioning is started. Another disadvantage with the system, on top of the time consuming and diligent method for locating, addressing and identifying according to the above, is that at large premises such as assembly halls, open office areas and the like, the locating must be further specified to later be able to find a specific sub-unit for service or troubleshooting in an easy way. This is not always performed why the more exact position of the sub-unit is not clear from the operation and maintenance manual, but remains a more or less general positioning. It is not certain that a specific sub-unit is positioned in the vicinity of the premises it serves, why drawings etc. not always provide good information about where the actual location of the sub-unit is, for example, floor 1, office 4 can instead tell which room is served but not that the sub-unit is positioned exactly there.

During operation of the commissioned facility the equipment such as dampers and fire dampers normally are "function tested" with certain intervals to control and secure that the facility is working, i.e. the dampers opens and closes for checking the function. If the final operation and maintenance documentation are not set properly, this can cause problems for later maintenance, troubleshooting, etc. When an error is indicated in a specific sub-unit, for example, linked to a valve, usually an alarm about this is activated, and a service technician must in some way look up this sub-unit, which today is done in a time-consuming and inflexible way, by that the service technician through drawings or flowcharts, alternatively indication on the master unit, learns where the specific sub-unit is located, at least approximately. If the sub-unit is connected to a certain office and the position is correct according to the drawing, this might not be a bigger problem, if it is an experienced service technician with knowledge of where sub-units normally are positioned. But if the drawing is incorrect regarding the position of the specific sub-unit or if the premises is big and thereby the actual sub-unit can be positioned anywhere in the false ceiling, the service technician cannot know where the sub-unit exactly is located. He must then take a chance and for example lift one of the false ceiling tiles and look for sub-units and hopefully eventually find and conclude that it is the actual sub-unit where the service must be performed. There is thus a need of an improved and faster method of addressing, locating and identifying sub-units in a so-called backbone system at a ventilation and/or smoke evacuation facility both for the commissioning of the system and for operations and maintenance.

### Disclosure of the invention

With the present invention the object is achieved to solve the above mentioned problems from a first aspect of the invention by a method for addressing, locating and identifying of a sub-unit at a facility according to the preamble of claim 1. The facility comprises a control system for controlling of the components connected via a backbone system (network). The initial connection of the components of the backbone system, i.e. at least one master unit and one or more, of the master unit subordinate sub-units, is performed in a common manner by an electrician who makes sure that all components are powered. The method starts after this, namely after this commissioning stage, and starts with that the master unit is turned on by an operator, whereby the control system automatically addresses all sub-units which communicates via the backbone system, whereby the sub-units achieves a Modbus-address or the similar. This can be performed for example in a way that the sub-units simply get assigned to the first available Modbus-address or otherwise obtain a selectable address, and the control system and the sub-units are arranged to automatically provide the addressing. After this, all through the backbone system communicating sub-units are presented, via an interface, which communicates with the control system, preferably via wireless connection. The interface can be in the form of a list, drawings or combinations of these or other type, which is preferably provided in a so-called tablet, smart phone, laptop, or the like. When the list of components is presented, the sub-units thereby already have a Modbus-address, but it is not known where the respective sub-unit is located physically and further they have no assigned identity. Hereafter, a locating of the sub-units is accomplished by that the operator initiates the locating according to a, preferably pre-defined, locating method, whereby a subset of the sub-units are set to give a signal, by that they are arranged with some kind of signaling means. The locating method can be selectable in the interface, but is preferably pre-set and determines the size of the subset of the not located sub-units, to set to signal. Preferred is the method which gives the quickest result to locate a certain subset. The type of signal can also vary depending on how the system is designed and how the sub-units are arranged, and also how the operator will be able to interact with the control system via the interface. Thus, sound, light, GPS-signal, Bluetooth, Wi-Fi-signal or other possible signal can be used, which in some way can be identified/detected by an operator and/or some kind of equipment. By interaction between the operator and the control system via the interface a subset of the sub-units can be excluded by that the operator responds to the whether the signal can be identified/detected or not. For example, this may mean answering yes or no to a question about if the signal is perceived, such as a beep or a light signal. This requires that the operator deployed anywhere in the facility, for example, in a certain place where he could assume or know that a sub-unit is positioned or should be positioned. If the signal is perceived, can all sub-units that was not set to signal be excluded and vice versa. Then, a subset of the remaining, not excluded sub-units are set to signal, either on initiative by the operator or automatically by the system, and the procedure is repeated until only one sub-unit remains, which is the actual one where the operator physically is situated. Thus, the operator has identified the sub-unit where he is, or moved to because of the signal, and via the interface the operator now assigns the current position to the actual sub-unit, preferably with location/name, whereby the sub-unit achieves an identity. The identified sub-unit is removed from the number of unidentified sub-units in the interface, and the procedure is repeated by again putting a subset of the non-located and identified sub-units to signal, and the procedure is repeated until all sub-units are located and identified. Accordingly, all sub-units obtained an address, such as a Modbus-address, have been located where in the facility the physical position of the sub-unit is and also have received an appropriate identity. This facilitates the commissioning significantly at such a facility, and much time and effort will be saved, and a better working environment for operators and maintenance personnel is obtained when one can completely avoid climbing ladders etc. The prior art in this field is circumstantial, time-consuming and entails risks for staff.

According to a particularly preferred embodiment the locating method is a halving method, which means that half, or at least close to half if the numbers of sub-units are uneven, of the sub-units is set to signal for locating of sub-unit. If the operator located somewhere in the facility detects the signal, such perceive a sound signal or a light signal, and provides this response via the interface, half of the sub-units which do not signal is excluded, wherein the number of possible sub-units already in the first stage is halved. Of the remaining subset - the ones that signaled - again half of these are set to signal and the procedure is repeated until the specific sub-unit is located and can be assigned an identity. The halving method means a very rapid reduction of the number of sub-units, which leads to a quick identification and much time is saved compared to conventional solutions.

In a preferred embodiment, the signaling is done with an audio signal by that each sub-unit includes any form of audio means, for example a buzzer, speaker, or the like. The sound is adapted to be moderately high to be able to be located and pass through for example the surrounding casing of the sub-unit and possibly false ceilings etc. The operator then needs to give response to if the audio signal is perceived or not, wherein the subset not fitting the answer from the operator is excluded in the same manner as described above. Thus, the operator/ the service technician doesn't need to climb up to respective sub-unit or even be located exactly at such a unit, but can by the sound step-wise locate the sub-unit and finally assign the correct identity, for example by a positioning assignment or appropriate term.

According to a preferred embodiment the signaling is perform by means of light, by that respective sub-unit comprises some kind of light means, for example a lamp, diode or the like. This fits a facility taken into operation before any false ceilings are mounted or if false ceiling is missing, as is common for example in shopping malls or some other types of premises. In the same way as described above, this means that the operator can register with the eye which subunits that glows or flashes, and the response can be given in the same way if the light can be registered or not. As described above, it is quick and safe without risk for the operator to locate and give an identity to each subunit of the system.

From a second object of the invention the object to solve the above mentioned problems during operation time, is achieved by a method for locating of a particular sub-unit connected to the master unit via the backbone system, according to the preamble of claim 5. This is primarily aimed to, in a simple and fast way, locate one sub-unit where an error is indicated, that is at a already commissioned facility according to the previously described method. This means that all, to the master unit connected, sub-units already have an address (for example Modbus) and are located and given an identity during start-up. When an error is indicated, an alarm usually is activated and a technician is called to the facility. He must then in an easy way find the specific sub-unit, why the actual sub-unit is set to signal. By that the identity already is known, the technician probably knows where approximately the sub-unit is located, but it can be a problem anyway because that the premises can be large, the exact position might not be known and the sub-unit might not be visible above the false ceiling and so on. By detecting the signal the operator can easily locate the sub-unit and doesn't need to climb up and down on a ladder until the sub-unit is found as in prior art solutions. When the actual sub-unit is located the unit can be examined and any service or repairs be performed.

In another aspect is a method for locating a sub-unit performed. This is primarily aimed to, in a simple, and in the same way as at start-up, find that particular sub-unit where the operator/ the technician is located, to perform service in an already running facility according to the first described method. During operation time service actions might be performed for all or a number of sub-units connected to the master unit via the backbone system. A service technician can in this way simply place himself in a premises and initiate location of the sub-unit, as earlier described, to locate the sub-unit just where the technician is physically located. This is performed by that a subset of the sub-units is set to signal and by interaction via the interface the operator responds to if the signal is perceived or not. In the same way as described above, the subset that not comply with the response from the operator is excluded, and in the same way as above, the method continues until the actual sub-unit is located. Thereby the operator also gets information about the present sub-unit address in the backbone system (network) and its identity, through the interface. After this, the operator can take the steps to be performed for the particular subunit, which for example may be forced control of a damper or the like. This may advantageously be performed via the same interface used for locating, such as a tablet, smart phone, laptop or similar. Even from this aspect, the method is clearly advantageous compared to if the operator must climb up a ladder and so on, to locate exactly where a sub-unit is positioned such as at existing technology.

By the invention a number of advantages over known solutions are achieved:
- Much faster and simplified addressing of sub-units by automatic assigning all sub-units connected to the master unit via the backbone system.
- Time saving method for locating and identifying at start-up of a facility.
- Improved and safer working environment while the need of climbing up to the respective sub-unit for commissioning is significantly reduced or completely has ceased.
- At error indication is the locating of the specific (defective) sub-unit faster and safer because the signal is used to locate it.
- When servicing, the same method can be used to locate the sub-unit that is close to where the service engineer is positioned, by detecting the signal until the correct unit found.

An exemplary embodiment of the present method is apparent in the following detailed description of an embodiment of the invention with reference to the accompanying drawings showing a preferred but not limiting embodiment of the invention.

### Short description of the figures

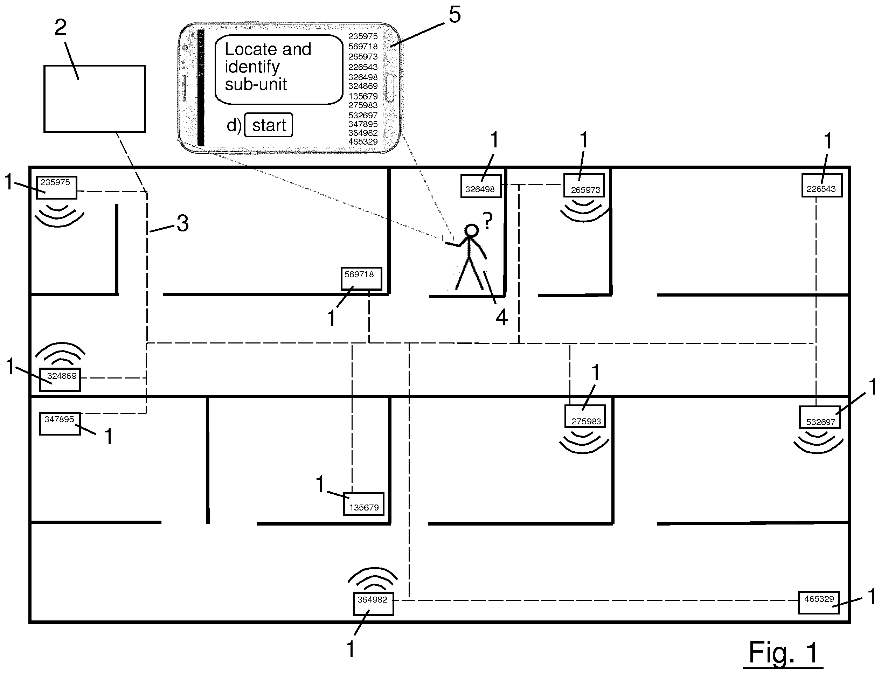

**Fig.1-5** schematically shows an example of how a part of the inventive method gradually leads an operator to locate and identify a sub-unit which communicates with a master unit via a backbone system.

### Detailed description of the figures

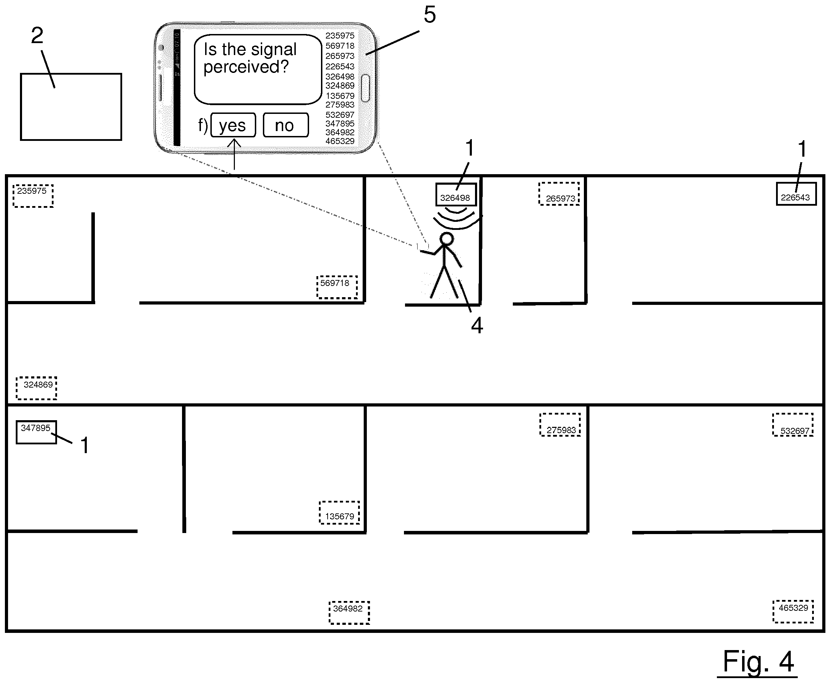

**Fig.1** shows a principled view of a floor in a building with a number of offices, conference rooms and corridors. To control a number of functions in a ventilation system or a flue gas evacuation facility (not shown) is a number sub-units 1 deployed in appropriate places, usually above a false ceiling, which can be said to be the normal case in many types of office spaces and more public facilities. The sub-units 1 are subordinate to a master unit 2, which is provided with some form of control system (not shown) for the control and monitoring of the master unit 2 and the subordinate sub-units 1. The control system can also control a number of other master units 2 and other function within the facility etc. All sub-units 1 and the master unit 2 are at this stage connected to a mains power supply and further they are also connected via a network/backbone system 3, which in the figures are of symbolic nature and can be in the form of a wired systems connected according to different topologies, such as for example "daisy chain", "ring system" and "star formation". Alternatively the backbone system 3 can be a wireless system such as "wireless mesh network", "point to point", "star network", "clustered tree network "etc. An operator 4 will now put the system into operation and while the master unit 2 is put into operation all sub-units 1 are automatically assigned a respective "address", normally in the form of a Modbus-address or the like. All sub-units 1 that has an address but which are not located and identified are presented via an interface 5, which in the example is a so-called "tablet", a smart phone, computer or other device that can be connected to the system. According to the following example there is twelve sub-units 1 to be located and identified. The operator 4 which shall locate and give the respective sub-unit 1 an identity positions himself anywhere on the floor, at or close to a sub-unit 1 which he wants to identify. The operator 4 initiates locating of a sub-unit 1 by giving a command via the interface 5, whereby a subset, preferably half or as close to half of the sub-units 1 as possible, is set to signal. In the preferred and presented example each sub-unit 1 comprises a buzzer (not shown), which is activated at half of the number of sub-units 1 at the initiation of the locating procedure, wherein an audio signal sounds at this subset of the sub-units 1.

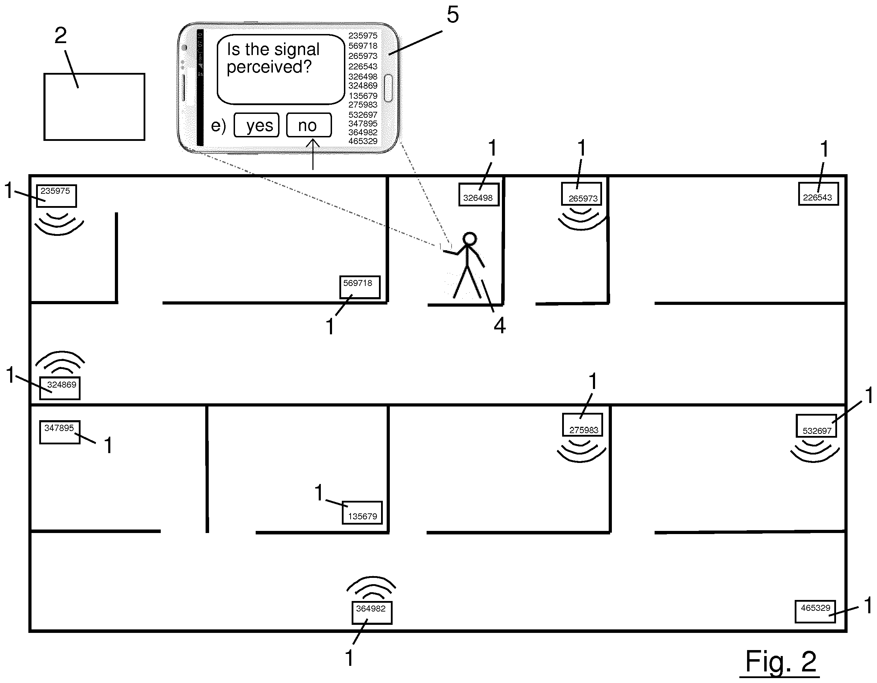

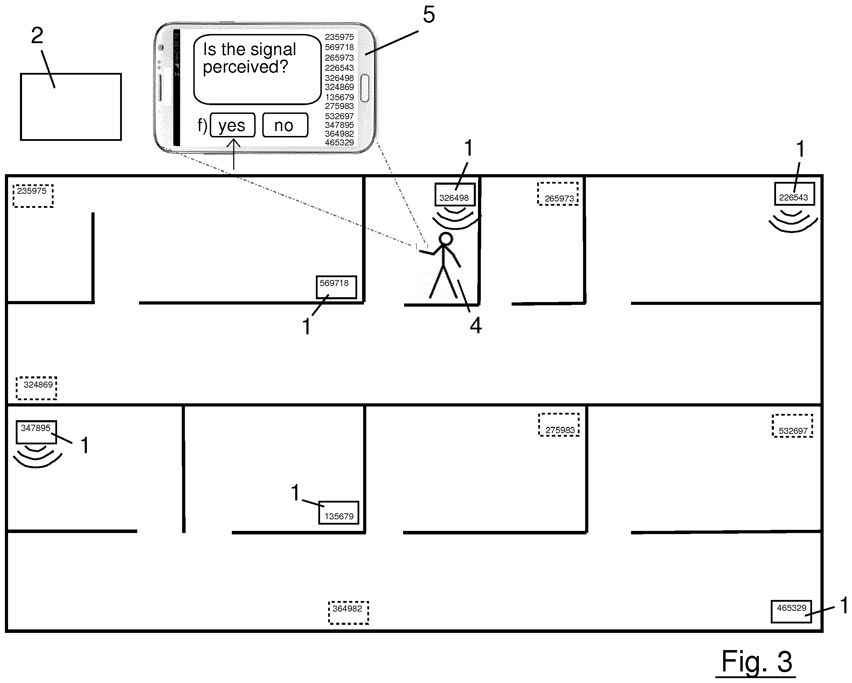

**Fig.2** shows how half of the sub-units 1 - namely six units - are signaling/emits the audio signal and via the interface 5, the operator 4 is interacting by answering the presented question. In this case the operator 4 responds on whether the audio signal is perceived, but in the example the operator 4 doesn't perceives the signal because the sub-unit 1 positioned in the same room is not set to signal, why the question is responded by "no". Thus, automatically all six subunits 1 which was set to signal from the locating procedure in this first "round", are excluded, as it is clear that the wanted sub-unit 1 was not amongst the signaling sub-units 1. Of the remaining subset of the sub-units (six units) are now automatically, or at the initiative of the operator 4, again half (three units) of the remaining sub-units 1 set to signal, see Figure 3.
**Fig.3** shows both the, in the previous step, excluded subset of subunits (six dashed units), and also that half of the subset of the remaining subunits 1 (six solid units) is set to signal. Via the interface 5 the operator 4 once again receives the question if the signal is perceived, which in this example the question is answered with a "yes" because the sub-unit 1, where the operator 4 is positioned emits a beep.
   Again the subset that does not correspond with the operator 4 reply is excluded, in this round the ones which do not emit a signal (three sub-units). This leaves according to the example, only three sub-units 1 that possibly can be the one where the operator 4 is positioned, see further Figure 4.

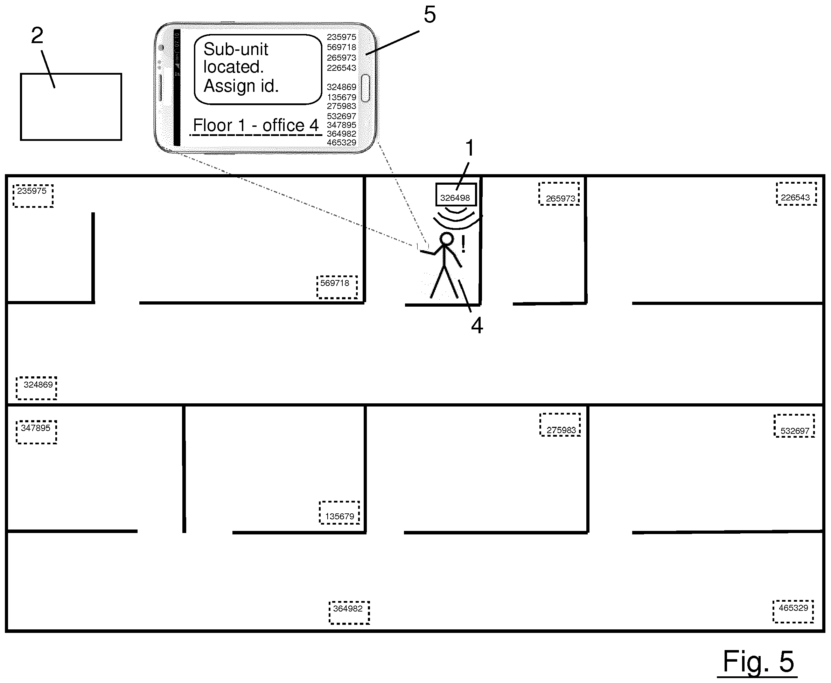

**Fig.4** now show that again about half of the sub-units 1, is set to signal either automatically by the program or on initiative of the operator 4 - in this case one of the three remaining is signaling. As before the operator 4 is interacting with the control system via the interface 5 and according to the example it was the correct sub-unit 1 that signaled, why the two other sub-units 1 can be omitted. The only one remaining is the actual sub-unit 1, where the operator 4 is positioned physically, see further Fig. 5.
**Fig.5** shows, first of all in the previous step excluded subunits (eleven dashed units), and the only remaining sub-unit 1, which is the current sub-unit 1, where the operator 4 is physically located and which is now stated by the control system as the correct sub-unit 1, via the communication interface 5. The operator 4 is invited to assign an identity to the sub-unit 1, which preferably describes the physical location or the like. When identity is inputted via the interface the sub-unit 1 is assigned this identity when the operator 4 accepts or acknowledges the identity, whereafter this sub-unit 1 disappears from the list of unidentified sub-units 1 in the interface 5. The operator 4 can now move to another room on the same floor and start again, and by that the method is repeated until all the sub-units 1 are located and identified, all of the sub-units can, in a quick, easy and safe manner be put into operation.

### PARTS LIST

- 1=: sub-unit
- 2=: master unit
- 3=: network/backbone system
- 4=: operator
- 5=: interface

## Claims

1. Method for addressing, locating and identifying sub-units (1) at a facility for handling of ventilation air and/or flue gas, which facility comprises a control system with at least one master unit (2), and the sub-units (1) communicates with the master unit (2) via a network (3), and the sub-units (1) are subordinate to said master unit (2), **characterized by** the steps that:
a) the master unit (2) is put into operation, whereby
b) the control system automatically addresses all sub-units (1) via the network (3),
c) all, via the network (3) communicating, sub-units (1) are presented via an interface (5), which communicates with the control system, preferably via wireless connection,
d) an operator (4) positions itself somewhere in the facility and the locating of the sub-units (1) is initiated by that the operator (4) initiates locating according to a predefined locating method whereby a subset of the sub-units (1) is set to signal, by that the sub-units (1) comprises at least one signaling means,
e) depending whether the signal is detectable or not information about this is transferred to the control system via the interface (5) whereby a subset och the sub-units (1) is excluded by the control system based on said information,
f) at remaining, not excluded subset, the steps d-e are automatically repeated, until only one sub-unit (1) remains,
g) identification takes place by assigning of the actual position or an identity to the actual sub-unit (1),
h) the identified sub-unit (1) is automatically removed by the control system from the number of unidentified sub-units (1),
i) the steps d-h are repeated until all sub-units (1) are located and identified.

2. The method according to claim 1, **characterized by** that the locating method is a halving method, wherein half of the non-located and unidentified sub-units (1) are set to signal.

3. The method according to claim 1 or 2, **characterized by** that the signaling is done with an audio signal by that the respective sub-unit (1) comprises an audio means.

4. The method according to claim 1 or 2, **characterized by** that the signaling is done with a light signal by that the respective sub-unit (1) comprises a light means.

5. Method for locating a sub-unit (1) which is already identified according to any of the claims 1 - 4, **characterized by** the steps that:
j) the steps d - f according to any of the claims 1 - 4 are performed, wherein the actual sub-unit (1) is located,
k) the interface (5) shows the sub-unit (1) address in the network (3) and its identity.
